# EUROPEAN PATENT APPLICATION

(11) **EP 4 141 291 A1**
(43) Date of publication of application: **01.03.2023**
(21) Application number: 22191124.1
(22) Date of filing: 19.08.2022
(51) Int. Cl.: F16H 57/039, F16H 57/04, F16H 61/28, F16H 61/32, F16H 63/34, F16H 63/38, F16H 57/02, F16H 61/12

(54) **PERFECTED VEHICLE TRANSMISSION ACTUATOR**

(30) Priority: 26.08.2021 IT 202100022376
(71) Applicant: Marelli Europe S.p.A., 20011 Corbetta (MI) (IT)
(72) Inventor: MUSOLESI, Stefano, I-20011 Corbetta, MILANO (IT); OGREZEANU, Cristian, I-20011 Corbetta, MILANO (RO); BARTOLOTTA, Giancarlo, I-20011 Corbetta, MILANO (IT)
(74) Representative: Mitola, Marco

(57) **Abstract**

.Vehicle transmission actuator (4), comprising an electric motor (20) having an output pinion (24) rotating about an input axis (I-I), an intermediate shaft (28), rotating about an intermediate axis (I-I), provided with a main gear (32), engaged with said output pinion (24) of said electric motor (20), and with an endless screw (36), an output shaft (40) provided with at least one gear wheel sector (44) engaged with said endless screw (36), and rotatable about an output axis (0-0). The intermediate shaft (28) is provided with a return spring (48) to implement a function of rotating the intermediate shaft (28) and the output shaft (40) mechanically connected thereto, to bring the output shaft (40) to a predefined default position.

## Description

### FIELD OF APPLICATION

The present invention relates to a perfected vehicle transmission actuator, in particular for an automatic gearbox selector, for a selector on mechatronic gearboxes, for engaging a four-wheel drive and/or for engaging electric axles.

### BACKGROUND ART

In the automotive sector, and in particular in automotive transmissions, the need is perceived to provide an actuator which can offer high levels of torque to the output shaft, controllability in various positions with high precision (closed loop control), return to the default position in the event of lack of power supply (voltage/current), locked kinematics in predetermined positions, modular architecture (non-reversible actuator, reversible, reversible with locking system manageable by adding components to basic architecture) and finally the availability of a control unit on board the vehicle.

Furthermore, the need is perceived to provide an actuator of the modular type, having compact dimensions in order to be able to be integrated into pre-existing architectures. Obviously, the requirement to reduce the dimensions also implies technical problems in terms of dissipation of the heat generated by the mechanical and electronic components that constitute the actuator.

The mentioned requirements apply to various applications in the automotive sector such as, for example, Park lock, Shift By Wire, transmissions for electric and/or hybrid vehicles, on road and off road applications.

In the state of the art there are no actuator solutions which can obtain the aforementioned characteristics.

### PRESENTATION OF THE INVENTION

Therefore, the need is felt to solve the drawbacks and limitations stated with reference to the prior art.

Such need is fulfilled by a vehicle transmission actuator according to claim 1.

### DESCRIPTION OF THE DRAWINGS

Further features and advantages of the present invention will become more comprehensible from the following description of preferred embodiments thereof, given by way of non-limiting examples, in which:

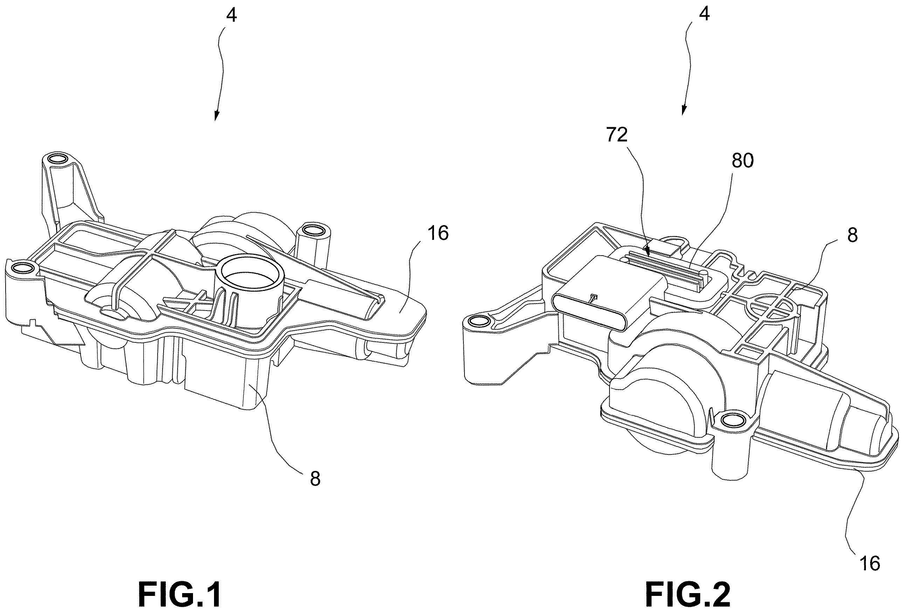

figures 1-2 represent perspective views from above and below, in an assembled configuration, of a vehicle transmission actuator according to an embodiment of the present invention;

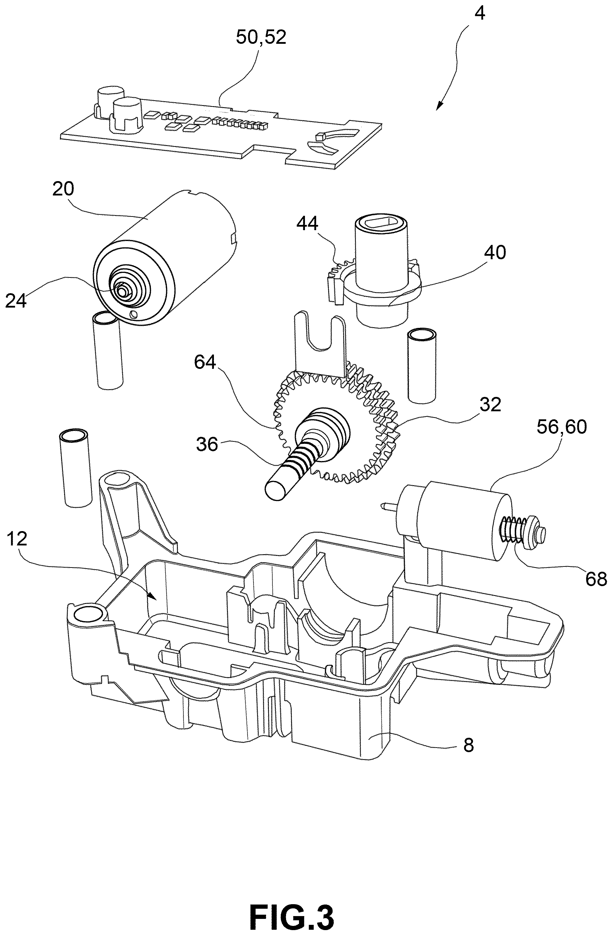

figure 3 represents a perspective view in separate parts of the vehicle transmission actuator of figures 1-2;

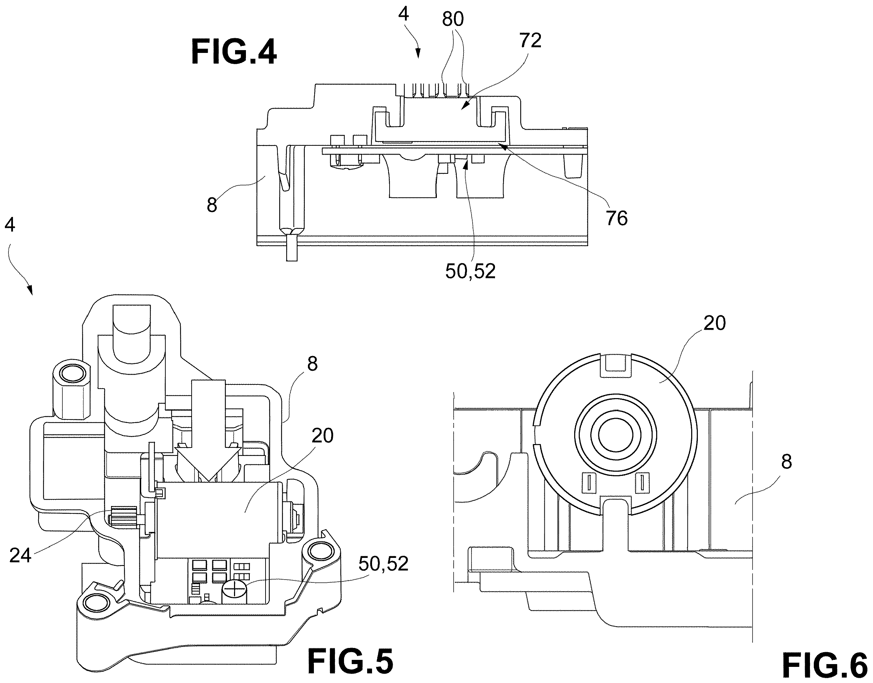

figure 4 represents a sectional view, in the assembled configuration, of the vehicle transmission actuator of figures 1-2;
figure 5 represents a perspective view, without cover and partially assembled, of an actuator according to a possible embodiment of the present invention;
figure 6 represents a front view of an assembly detail of the actuator of figure 5;

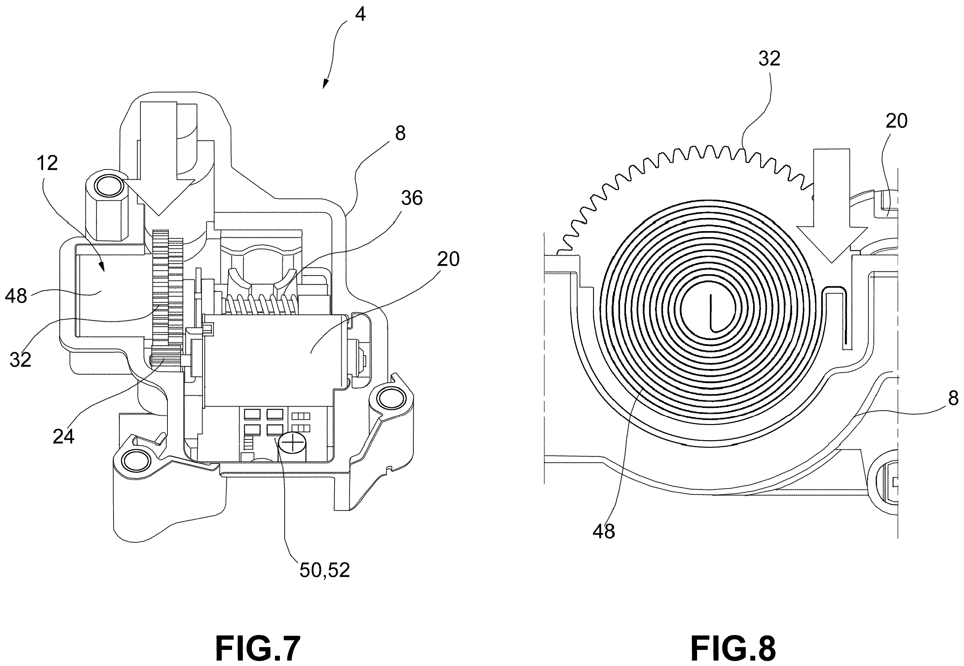

figure 7 represents a perspective view, without a cover, of an actuator in a subsequent assembly step with respect to figure 5;
figure 8 represents a front view of an assembly detail of the actuator of figure 7;

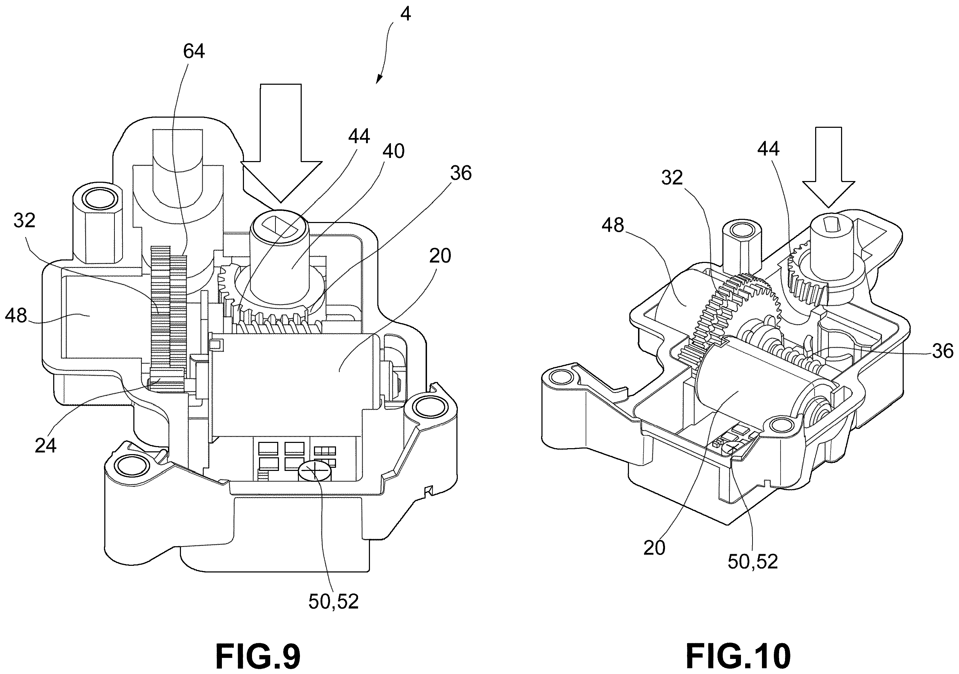

figures 9-10 represent perspective views, without cover, from different angles, of an actuator in a subsequent assembly step with respect to figure 7;

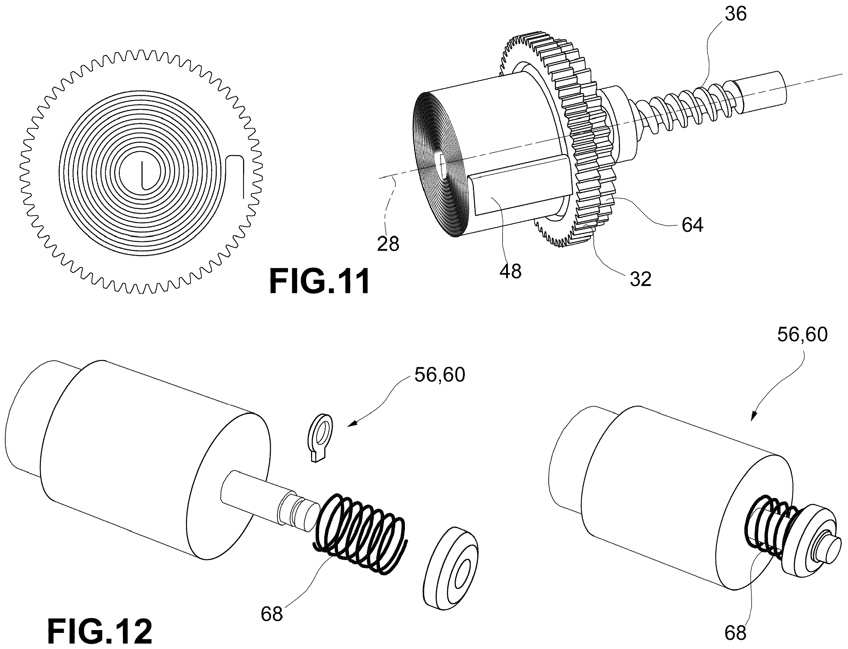

figures 11 and 12 represent perspective views of details of a vehicle transmission actuator according to the present invention;

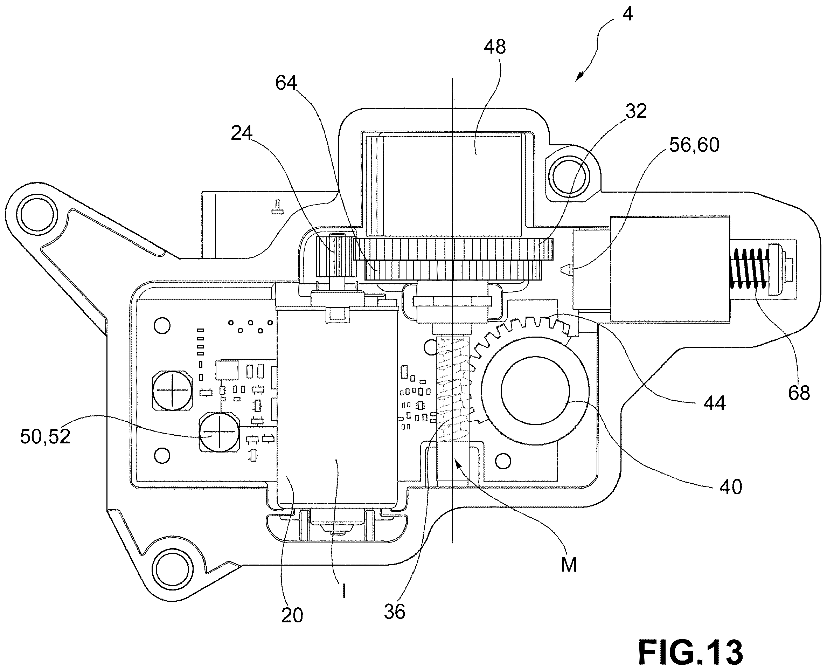

figure 13 represents a plan view from above, without cover, of an actuator in a final assembly step;

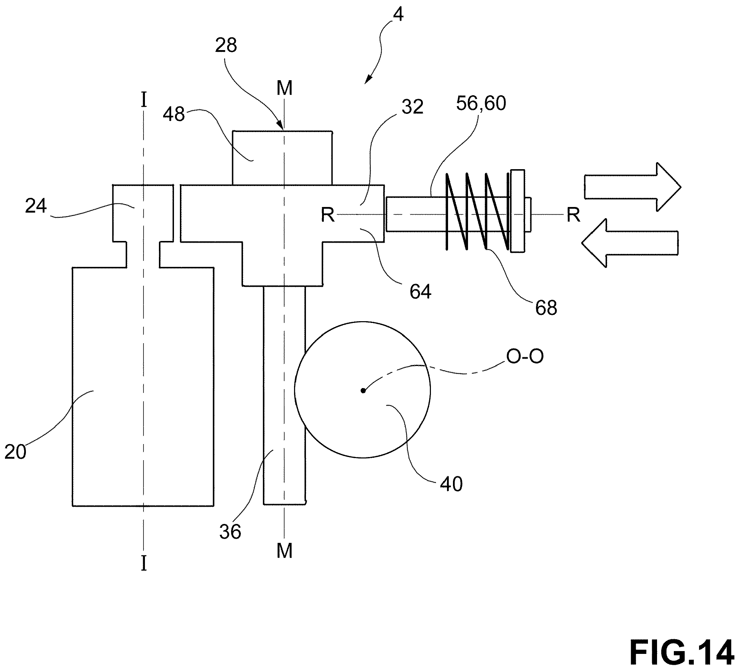

figure 14 represents a schematic view of the operation of a vehicle transmission actuator according to an embodiment of the present invention.

### DETAILED DESCRIPTION

With reference to the aforesaid figures, 4 indicates as a whole an overall schematic view of a vehicle transmission actuator.

It is to be stated that the actuator according to the present invention can be used for an automatic gearbox selector, for a selector on mechatronic gearboxes, for engaging a four-wheel drive and/or for engaging electric axles.

The actuator 4 comprises an actuator body 8 which delimits a containment volume 12, adapted to contain a plurality of components illustrated below, and a cover 16 associable with the actuator body 8, so as to close the access to the containment volume 12.

For example, the actuator body 8 houses internally to the containment volume 12 an electric motor 20, an intermediate shaft 28, a power supply electronic circuit 50 and at least partially an output shaft 40, better described below.

The actuator 4 comprises an electric motor 20 (preferably in direct current) having an output pinion 24 rotatable about an input axis I-I.

The actuator 4 further comprises an intermediate shaft 28, rotatable about an intermediate axis M-M, provided with a main gear 32, engaged with said output pinion 24 of the electric motor 20, and with an endless screw 36.

Furthermore, the actuator 4 comprises an output shaft 40 provided with at least one gear wheel sector 44 engaged with said endless screw 36, and rotatable about an output axis O-O.

Preferably, the input axis I-I and the intermediate shaft 28 are parallel to each other and perpendicular to the output shaft 40.

Preferably, the transmission ratios between the input axis I-I and the intermediate shaft 28, and between the intermediate shaft 28 and the output shaft 40 are of a reductive type.

Preferably, the meshings between the output pinion 24 of the input axis I-I and the intermediate shaft 28, and between the intermediate shaft 28 and the output shaft 40 are of the reversible type.

According to an embodiment, the intermediate shaft 28 is provided with a return spring 48 to implement a function of rotating the intermediate shaft 28 and the output shaft 40 mechanically connected thereto, to bring the output shaft 40 to a default position.

For example, the return spring 48 is a torsion spring arranged coaxially to the intermediate shaft 28.

The output shaft 40 provides a plurality of angular positions of rotation with respect to the output axis O-O; the electric motor 20 is programmed to drive the output shaft 40 to each of said angular positions of rotation of the output shaft 40.

Preferably, but not necessarily, said angular positions of the output shaft 40 are angularly equidistant from each another.

For example, the angular positions of the output shaft 40 are angularly equidistant from each other by 10°: typically, the actuator provides for the arrangement of the transmission in four different operating positions corresponding to the operating conditions of parking, reversing, driving forward and neutral. In that case the output shaft has a maximum angular range of 40°.

According to a possible embodiment, said at least one gear wheel sector 44 is configured to provide two mechanical angular end stops to its rotation, in relation to opposite directions of rotation.

Usually, the gear wheel sector 44 is less than 360°, but it is also possible to provide that the gear wheel sector 44 is complete, extending for a turn angle, i.e., 360°.

Preferably, the actuator 4 is provided with a position sensor on the output shaft 40 to enable closed loop position control.

In particular, the actuator 4 is provided with a processing and control unit 52 with a power unit for managing and controlling the electric motor 20.

The processing and control unit 52 is typically associated with the power supply electronic circuit 50.

The processing and control unit 52 is programmed so as to control the electric motor 20 to rotate the output shaft 40 in the operating positions required by the transmission and, for this purpose, is operatively connected both to the electric motor 20 and to the position sensor on the output shaft 40 to enable closed loop position control (feedback).

According to a possible embodiment, the actuator 4 is provided with a locking device 56 configured to angularly lock the intermediate shaft 28 and thus the output shaft 40 kinematically connected thereto in position.

In particular, said locking device 56 is configured to allow a locking of the intermediate shaft 28 in any angular position reached by the latter during its rotation.

For example, said locking device 56 is a solenoid or electromagnet device, operatively connected to a processing and control unit 52 which also controls the electric motor 20.

According to a possible embodiment, the locking device 56 is configured as a tip 60 selectively removable so as to engage between two consecutive main teeth of the main gear 32, along a radial extraction direction R-R, perpendicular to the intermediate axis M-M.

For the purpose of cooperating with the locking device 56, the intermediate shaft 28 is associated with a secondary gear 64, coaxial with said intermediate shaft 28, provided with a plurality of secondary teeth.

For example, the locking device 56 is configured as a tip 60 selectively removable along the radial direction R-R so as to engage between two consecutive secondary teeth of the secondary gear 64 and to lock the latter in rotation.

Preferably, said secondary gear 64 has a smaller meshing diameter than the main gear 32.

According to a possible embodiment, said locking device 56 is an electromagnetically operated selector switch, configured, when activated, to move to an extracted configuration and lock the intermediate shaft 28.

Furthermore, said locking device 56 is preferably provided with a return spring 68 for kinematically disengaging or releasing the intermediate shaft 28 in case of power failure of the locking device 56 and/or the actuator 4.

According to an embodiment of the present invention, a bottom of the actuator body 8 and/or said cover 16 of the actuator body 8, facing the power supply electronic circuit 50 is provided with at least one heat sink 72, at least partially embedded in the actuator body 8 and/or the cover 16, and communicating with the outside of said actuator 4.

Preferably a mat 76 (known as a gap-pad) is provided between the power supply electronic circuit 50 and the heat sink 72.

Said mat 76 guarantees contact and consequent heat exchange between the power supply electronic circuit 50 and the heat sink 72.

According to a possible embodiment of the present invention, the mat 76 is thermally conductive to optimize heat dissipation, i.e., heat exchange between the power supply electronic circuit 50 and the heat sink 72.

According to a possible embodiment of the present invention, said mat 76 has high elasticity in its thickness, so as to ensure physical contact between the power supply electronic circuit 50 and the heat sink 72, recovering possible assembly clearance and thermal expansion between the components during their operation.

According to a possible embodiment of the present invention, said mat 76 is self-adhesive, in order to simplify the assembly of the components of the actuator 4.

The heat sink 72, typically made of metal, is an air heat sink or exchanger, and therefore has a plurality of cooling fins 80.

Preferably, the heat sink 72 is associated with the actuator body 8 and/or the cover 16 by a layer of resin.

The operation of a vehicle transmission actuator according to the present invention will now be described.

In particular, based on the operation of the change of speed (in light of the user's requirements) the processing and control unit controls the electric motor 20 so as to rotate the intermediate shaft 28 and thus the output shaft 40 in the pre-selected angular position.

Once such angular position has been reached, the electric motor 20 is deactivated, i.e., it no longer dispenses any torque, as the maintenance of the angular position of the output shaft 40 is guaranteed by the locking device 56.

In particular, the same processing and control unit 52 controls the extraction of the tip 60 of the locking device 56 which is positioned between two consecutive teeth of the secondary gear 64 preventing any rotation of the secondary gear 64, and thus any rotation of the intermediate shaft 28, the output shaft 40 and the electric motor 20.

When the user needs to change the transmission ratio, the processing and control unit 52 brings the locking device 56 and the tip 60 into disengagement with respect to the secondary gear 64 and thus activates the electric motor in order to rotate the output shaft 40 in the final position required by the user.

It is to be noted that the return of the locking device 56 in disengagement or release is automatically guaranteed by the return spring 68.

In this way, in the event of an electrical fault, the locking device 56 is automatically brought into the disengagement or release position.

In the same way, in the presence of an electrical fault, the return spring 48, which influences the intermediate shaft 28, acts on the latter by rotating it until reaching a safe position which, in the event of transmission for vehicles, corresponds to the parking position.

As can be appreciated from the above description, the present invention allows overcoming the drawbacks of the prior art.

Advantageously, the present invention provides an actuator able to provide high levels of torque to the output shaft, controllability in various positions with high precision (closed loop control).

Furthermore, thanks to the provision of the locking device (solenoid), it is possible to lock the kinematics of the actuator in the various predetermined operating positions of the output shaft (e.g., parking, reversing, neutral and driving forward) so as to require the electric motor to work continuously.

In other words, the electric motor may advantageously be switched off from time to time (after bringing the output shaft into the operating position required by the user) and in its stead the mechanical lock is actuated through the locking device.

Furthermore, the present invention enables, through the return to the default position in the event of lack of power supply (tension/current), the locking of the kinematics in predetermined positions. In this way the solution is also safe in the event of electrical fault of the actuator.

Advantageously, the present invention provides a modular architecture (non-reversible actuator, reversible, reversible with locking system manageable by adding components to basic architecture) and finally provides a control unit on board the vehicle.

Furthermore, the actuator according to the present invention has compact dimensions in order to be able to be integrated into pre-existing architectures and be able to fulfill the modularity requirements described above.

Despite the extremely compact dimensions, the actuator according to the present invention enables effective dissipation of the heat generated by the mechanical and electronic components of which it is comprised.

Finally, the present invention relates to a perfected vehicle transmission actuator which can be used for an automatic gearbox selector, for a selector on mechatronic gearboxes, for engaging a four-wheel drive and/or for engaging electric axles.

A person skilled in the art can make numerous changes and variants to the solutions described above, all contained within the scope of protection of the invention defined by the following claims to satisfy contingent, specific needs.

## Claims

1. Vehicle transmission actuator (4), comprising:
- an electric motor (20) having an output pinion (24) rotating about an input axis (I-I),
- an intermediate shaft (28), rotating about an intermediate axis (I-I), provided with a main gear (32), engaged with said output pinion (24) of said electric motor (20), and with an endless screw (36),
- an output shaft (40) provided with at least one gear wheel sector (44) engaged with said endless screw (36), and rotatable about an output axis (O-O),
- wherein the intermediate shaft (28) is provided with a return spring (48) to implement a function of rotating the intermediate shaft (28) and the output shaft (40) mechanically connected thereto, to bring the output shaft (40) to a predefined default position.

2. The vehicle transmission actuator (4) according to claim 1, wherein the return spring (48) is a torsion spring arranged coaxially with the intermediate shaft (28) .

3. The vehicle transmission actuator (4) according to claim 1 or 2, wherein the input shaft (I-I) and the intermediate shaft (28) are parallel to each other and perpendicular to the output shaft (40).

4. The vehicle transmission actuator (4) according to claim 1, 2 or 3, wherein the meshing between the input shaft (I-I) and the intermediate shaft (28), and between the intermediate shaft (28) and the output shaft (40) is of the reversible type.

5. The vehicle transmission actuator (4) according to any of the claims from 1 to 4, wherein the output shaft (40) provides a plurality of angular positions of rotation with respect to the output axis (O-O), and wherein the electric motor (20) is programmed to drive the output shaft (40) to each of said angular positions of rotation of the output shaft (40).

6. The vehicle transmission actuator (4) according to any of the claims from 1 to 5, wherein said at least one gear wheel sector (44) is configured to provide two mechanical angular end stops to its rotation, in relation to opposite directions of rotation.

7. The vehicle transmission actuator (4) according to any of the claims from 1 to 6, wherein the actuator (4) is provided with an on-board processing and control unit (50) with a power unit for managing and controlling the electric motor (20).

8. The vehicle transmission actuator (4) according to any of the claims from 1 to 7, wherein the actuator (4) is provided with a locking device (56) configured to angularly lock the intermediate shaft (28) and thus the output shaft (40) in position.

9. The vehicle transmission actuator (4) according to claim 8, wherein said locking device (56) is configured to allow a locking of the intermediate shaft (28) in any angular position reached by said shaft during its rotation.

10. The vehicle transmission actuator (4) according to any of the claims from 8 to 9, wherein said locking device (56) is configured as a tip (60) selectively removable so as to engage between two consecutive main teeth of the main gear (32), along a radial extraction direction (R-R), perpendicular to the intermediate axis (M-M) of the intermediate shaft (28).

11. The vehicle transmission actuator (4) according to any of the claims from 8 to 10, wherein an intermediate shaft (28) is associated with a secondary gear (64), coaxial with said intermediate shaft (28), provided with a plurality of secondary teeth, and wherein said locking device (56) is configured as a selectively removable tip along a radial direction (R-R) so as to engage between two consecutive secondary teeth of the secondary gear (64) .

12. The vehicle transmission actuator (4) according to any of the claims from 8 to 11, wherein said locking device (56) is an electromagnetically operated selector switch, configured, when activated, to move to an extracted configuration and lock the intermediate shaft (28) .

13. The vehicle transmission actuator (4) according to any of the claims from 8 to 12, wherein said locking device (56) is provided with a return spring (68) for kinematically disengaging or releasing the intermediate shaft (28) in case of power failure of the locking device (56) and/or the actuator (4).

14. The vehicle transmission actuator (4) according to any of the claims from 1 to 13, comprising an actuator body (8) internally housing the electric motor (20), the intermediate shaft (28), a power supply electronic circuit (50) and at least partially the output shaft (40), and a cover (16) joined so as to close the actuator body (8), wherein a bottom of the actuator body (8) and/or said cover (16), facing the power supply electronic circuit (50) is provided with at least one heat sink (72), at least partially embedded in the actuator body (8) and/or the cover (16), and communicating with the outside of said actuator (4).

15. The vehicle transmission actuator (4) according to claim 14, wherein a mat (76) is provided between the power supply electronic circuit (50) and the heat sink (72) to ensure contact and consequent heat exchange between the power supply electronic circuit (50) and the heat sink (72), said mat (76) being thermally conductive.

16. The vehicle transmission actuator (4) according to claim 15, wherein said mat (76) has elasticity in its thickness, so as to ensure physical contact between the power supply electronic circuit (50) and the heat sink (72), recovering possible assembly clearance and thermal expansion between the parts.
